# EUROPEAN PATENT APPLICATION

(11) **EP 1 354 774 A1**
(43) Date of publication of application: **22.10.2003**
(21) Application number: 01272332.6
(22) Date of filing: 26.12.2001
(51) Int. Cl.: B60R 21/26

(54) **GAS GENERATOR**

(30) Priority: 26.12.2000 JP 2000394877; 30.07.2001 JP 2001228831
(71) Applicant: Nippon Kayaku Kabushiki Kaisha, Tokyo 102-8172 (JP)
(72) Inventor: SASO, Takashi, Utsunomiya-shi, Tochigi 321-0944 (JP); HISADA, Manabu, c/o Nippon Kayaku K.K., Himeji-shi, Hyogo 679-2123 (JP); NISHIMURA, Tsuyokazu c/o Nippon Kayaku K.K., Himeji-shi, Hyogo 679-2123 (JP); TANAKA, Koji, c/o Nippon Kayaku K.K., Himeji-shi, Hyogo 679-2123 (JP)
(74) Representative: Cardy, Sophie
(86) International application number: JP0111459
(87) International publication number: WO02051673

(57) **Abstract**

In a gas generator comprising a cylindrical housing 1, gas generants 16 for generating gas by burning, which are charged in a plurality of combustion chambers 41 and 42 divided within the housing 1 and provided with orifices, and a plurality of ignitor devices 4 and 5 for burning the gas generants 16 within the respective combustion chambers 41 and 42 by spouting flame into the respective combustion chambers 41 and 42, wherein the ignitor devices 4 and 5 are arranged at each eccentric position from an axis of the housing 1, an enclosed space A for staying the generated gas discharged from the respective orifices 12 and 13 is formed at an outlet portion of the respective orifices 12 and 13 in the combustion chambers 41 and 42 having the ignitor devices arranged at the eccentric positions, and after passing through the enclosed space A, the gas is discharged from a gas discharge hole 14 formed in the housing 1.

## Description

### Technical Field

The present invention relates to a gas generator for a situation-adaptive airbag capable of controlling an expansion and inflation of an airbag by burning a gas generant within a housing by a plurality of ignitors.

### Background Art

In order to protect riders in an automobile from collision, a gas generator to immediately expand and inflate an airbag is built in an airbag module fitted in a steering wheel and an instrument panel. The gas generator is to inflame an ignitor (squib) by electricity from a control unit (actuator), hence to burn the gas generant to produce a great amount of gas rapidly.

Regardless of the seating position of a rider (a normal seat position, an abnormal seat position, such as a stoop-shouldered position, etc.) and the velocity (acceleration) of the automobile at a collision time, the conventional gas generator is always in a position to inflate and expand the airbag immediately. Accordingly, it is difficult to expand the airbag depending on the seating position of a rider and the velocity (acceleration) of the automobile at a collision time and there is a fear that the original function of the airbag protecting a rider cannot be exerted.

Recently, a gas generator for a situation-adaptive airbag which can expand the airbag depending on the seating position of a rider and the velocity (acceleration) at a collision time has been proposed and developed, for example, like a gas generator designed to inflate and expand the airbag slowly at an initial stage.

As a technique of inflating an airbag slowly at the initial stage, there is known a gas generator (soft inflator) for inflating and expanding a passenger-side airbag.

The gas generator has a long cylindrical housing partitioned into two combustion chambers, which are charged with the gas generants, and the gas generants within the respective combustion chambers are individually burnt by two ignitors (squibs).

Then, the respective ignitors (squibs) are operated (ignited) with a time difference and the gas generants within the respective combustion chambers are sequentially burnt. Thus, in the initial inflation of an airbag, a small amount of gas produced in one combustion chamber inflates and expands the airbag slowly and thereafter, a large amount of gas produced in the respective combustion chambers inflates and expands the airbag rapidly.

As mentioned above, by properly selecting the operation (ignition) of each ignitor, it is possible to control the inflation and expansion of an airbag depending on the seating position of a rider and the velocity (acceleration) at a collision time.

In the gas generator having this long cylindrical housing, however, the respective ignitors can be positioned on the axis between the both ends of the housing, but in a gas generator having an ignitor on one side of the cylindrical housing like a gas generator for a driver's seat, the ignitor is put at an eccentric position in the housing. Therefore, the amount of discharged gas becomes uneven in the circumferential direction of the housing according to the positional relation of each ignitor.

The present invention is to provide a gas generator capable of controlling the discharge amount of the gas for inflating and expanding an airbag and making the amount of the gas discharged from the housing uniform in the circumferential direction of the housing.

### Disclosure of the Invention

In order to solve the above object, a gas generator of the invention comprises: a cylindrical housing; gas generants for generating gas by burning, which are charged in a plurality of combustion chambers divided within the housing and provided with orifices; and a plurality of ignitor devices for burning the gas generants within the respective combustion chambers by spouting flame into the respective combustion chambers, in which at least one of the ignitor devices is arranged at an eccentric position from an axis of the housing, an enclosed space for staying the generated gas discharged from the respective orifices is formed at an outlet portion of the orifices in the combustion chamber having the ignitor devices arranged at the eccentric position, and after passing through the enclosed space, the gas is discharged from a gas discharge hole formed in the housing.

In the gas generator, the combustion gas generated in the respective combustion chambers passes through the orifices formed in the respective combustion chambers. A plurality of the orifices are provided there so as not to unevenly discharge the gas from the combustion chambers. Therefore, the combustion gas amount having passed through the orifices can be controlled so as to be uniform in the circumferential direction. The combustion gas whose amount is controlled by the passage through the orifices once stays in the space formed within the housing. At this time, a pressure of the combustion gas is increased in the space and the gas is discharged from the gas discharge hole at once.

Since the uniform amount of the gas can be discharged in the circumferential direction of the housing, an airbag can be expanded uniformly.

Further, in the gas generator of the invention, a cooling/filtering member is provided on an inner peripheral side of the orifices and a space for dispersing the generated gas is formed between the cooling/filtering member and the orifices.

In this gas generator, a cooling/filtering member is provided in every combustion chamber, and thanks to the cooling/filtering members, it is possible to collect the combustion slag generated in the respective combustion chambers, cool the generated gas, and discharge pure gas.

Further, in another gas generator of the invention, a cooling/filtering member is provided on an outer peripheral side of the orifices.

In this gas generator, it is not necessary to provide a cooling/filtering member in every combustion chamber, but the cooling/filtering member can be used only in the inner peripheral portion of the gas discharge hole of the housing.

Thus, the structure can be simplified and the manufacturing cost can be decreased. Further, since the cooling/filtering member is positioned at the outer periphery of the orifices, the burning efficiency is improved.

Additionally, the gas generator of the invention comprises restraining member for restraining the gas generated in one combustion chamber from entering into the other combustion chamber.

The combustion gas and the combustion slag generated in one combustion chamber passes through the orifices formed in the combustion chamber and stays in the space formed within the housing. At this time, there is the case where this combustion gas and combustion slag may pass through the orifices formed in the other combustion chamber and invade into the other combustion chamber, hence to induce gas generation due to the gas generants. In this case, a disadvantage occurs when gas generation is desired in the respective combustion chambers with time difference. Then, by providing this gas generator with the restraining member, gas generation in one combustion chamber will not induce gas generation in the other combustion chamber, but gas generation with time difference can be performed in the respective combustion chambers and the discharge amount of gas can be effectively adjusted.

In the gas generator of the invention, when the cooling/filtering member is provided on the outer peripheral side of the orifices, it is positioned so as to separate the enclosed space into the respective enclosed spaces communicating to the respective orifices.

By providing the cooling/filtering member within the enclosed space so as to separate the above space into the respective spaces facing to the respective orifices formed in the respective combustion chambers, it is possible to restrain the combustion gas and the combustion slag generated in one combustion chamber from invading into the other combustion chamber and prevent the combustion gas generated in one combustion chamber from inducing gas generation in the other.

Additionally, in the gas generator of the invention, the gas discharge hole is formed so as to uniformly discharge gas in a direction at right angles to the axis of the housing and in a circumferential direction, and aperture area of the gas discharge hole is larger than the sum of the aperture areas of the respective orifices.

In this gas generator, since gas can be uniformly discharged in the direction at right angles to the axis of the housing and in the circumferential direction, an airbag can be uniformly expanded. Further, since the aperture area of the gas discharge hole is larger than the sum of the aperture areas of the orifices, the housing can be prevented from being filled with pressure and it is possible to make the thickness of the housing thinner and the gas generator smaller and lighter.

Further, in the gas generator of the invention, a seal is attached to at least one of the orifices.

According to this structure, it is possible to prevent the gas generated in one combustion chamber from invading into the other combustion chamber.

Further, in the gas generator of the invention, a seal is attached to the gas discharge hole.

According to this structure, it is possible to prevent water and the like from entering into the combustion chamber and prevent the gas generants charged in the combustion chambers from getting humid. Further, internal pressure in the gas generator can be adjusted.

### Brief Description of the Drawings

Fig. 1 is a cross sectional view showing one embodiment of a gas generator according to the invention;
Fig. 2 is a cross sectional view showing another embodiment of a gas generator according to the invention;
Fig. 3 is a cross sectional view showing another embodiment of a gas generator according to the invention;
Fig. 4 is a cross sectional view showing another embodiment of a gas generator according to the invention;
Fig. 5 is a cross sectional view showing another embodiment of a gas generator according to the invention;
Fig. 6 is a cross sectional view showing another embodiment of a gas generator according to the invention; and
Fig. 7 is a cross sectional view showing another embodiment of a gas generator according to the invention.

### Best Mode for Carrying Out the Invention

Hereinafter, embodiments of a gas generator according to the invention will be described with reference to the drawings.

### [First Embodiment]

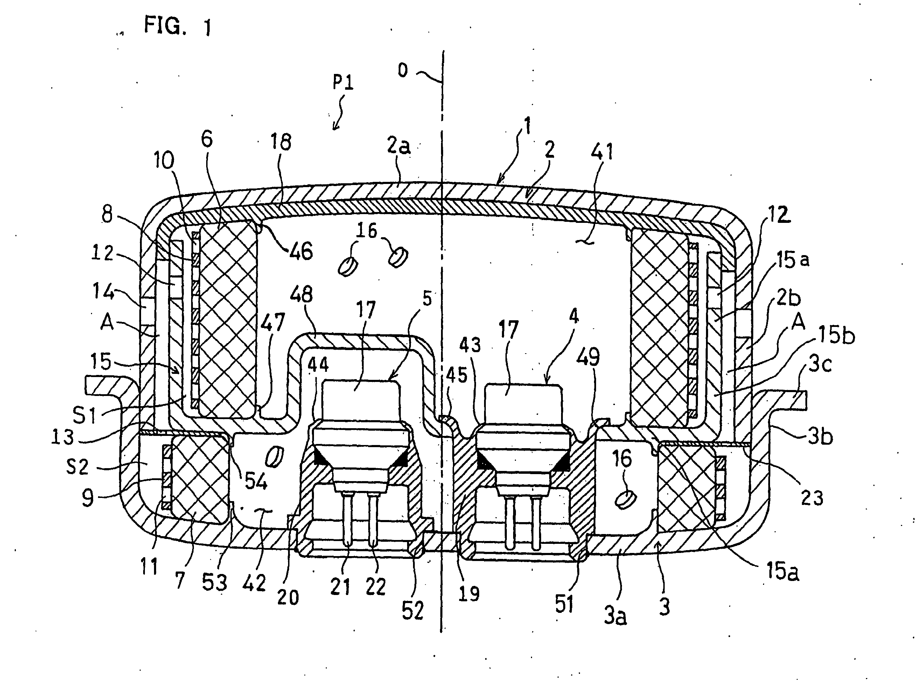

Fig. 1 shows a cross sectional view of a gas generator P1 according to a first embodiment of the invention. The gas generator P1 is to inflate and expand an airbag for driver seat. The gas generator P1 comprises a housing 1, first, second, and third partition members 15a, 15b, and 23, first and second cooling/filtering members 6 and 7, first and second ignitors 4 and 5, and first and second inner cylindrical members 8 and 9.

The housing 1 is a short cylindrical body having a top surface and a bottom surface, in the vertical direction. In Fig. 1, the reference numeral 0 indicates an axis of the cylindrical housing 1.

The housing 1 is formed by an upper container 2 and a lower container 3. The upper container 2 and the lower container 3 are jointed with each other by welding, welding with pressure, or the like. Thus, the housing 1 is enclosed.

The upper container 2 has a top portion 2a of substantially disk plate and a side portion 2b of the cylindrical body substantially extending downward from the edge of the top portion 2a in the vertical direction. A plurality of gas discharge holes 14 are provided on the side portion 2b in the circumferential direction. The gas discharge holes 14 are bored in the direction at right angles to the axis 0 of the cylindrical housing 1. The whole shape of the upper container 2 is like a short cup with its opening set downward.

The lower container 3 has a bottom portion 3a of substantially disk plate, a side portion 3b of the cylindrical body substantially extending upward from the edge of the bottom portion 3a in the vertical direction, and a flange portion 3c provided in the upper end portion of the side portion 3b of the cylindrical body. The flange portion 3c extends outward in the direction substantially at right angles to the axis 0 of the housing 1. In the bottom portion 3a, first and second holes 51 and 52 are formed eccentrically from the axis 0. The whole shape of the bottom container 3 of the housing 1 is like a short cup with its opening set upward.

The top portion 2a and the side portion 2b of the upper container respectively form the top surface and the upper side surface of the housing 1, and the bottom portion 3a and the side portion 3b of the lower container 3 respectively form the bottom surface and the lower side surface of the housing 1.

A retainer of an airbag module (not illustrated) is fitted to the flange portion 3c.

The space within the housing is partitioned by the first, second, and third partition members 15a, 15b, and 23 into two of the first and second combustion chambers 41 and 42 aligned up above the other in the direction of the axis 0. The second partition member 15b forms the first combustion chamber 41 together with the first partition member 15a and the third partition member 23 forms the second combustion chamber 42 together with the first partition member 15a. The second and third partition members 15b and 23 separate an enclosed space A from the first and the second combustion chambers 41 and 42.

The second partition member 15b has a cylindrical body and a plurality of orifices 12 provided in the circumferential direction. An annular enclosed space A is formed between the outer periphery of the second partition member 15b and the inner periphery of the side portion 2b of the upper container 2.

The first partition member 15a is a disk plate having the substantially same diameter as that of the second partition member 15b. The first partition member 15a and the second partition member 15b may be formed separately, but in this embodiment, the first partition member 15a and the second partition member 15b are formed integrally. On the whole, the shape is like a short partition cup 15 with its opening set upward. The first partition member 15a and the second partition member 15b respectively form the bottom and the side of the partition cup 15. The first combustion chamber 41 is formed inside of the partition cup 15.

The partition cup 15 should be smaller than the upper container 2 so as to secure the annular enclosed space A between the side portion 2b of the upper container and the side portion 15b of the partition cup when the partition cup 15 is accommodated into the upper container 2.

The third partition member 23 is an annular partition plate, having a plurality of orifices 13 in the circumferential direction. The third partition member 23 is abutted on the end of the side portion 2b of the upper container 2 and the bottom surface of the first partition member 15a, so as to form the second combustion chamber 42 together with the first partition member 15a.

A concave portion 48 and a hole 49 are provided in the first partition member 15a at an eccentric position from the axis 0 of the housing 1. The concave portion 48 means a concave 48 when viewing from the outside of the partition cup 15. When viewing from the inside of the partition cup 15, it becomes a convex 48.

The concave portion 48 of the partition cup 15 is large enough to insert the second ignitor 5 therein downwardly, in the other words, from the outside of the partition cup 15. It must be large at least enough to accommodate the portion of a tube 17 of the second ignitor 5 in the concave portion 48. The hole 49 is large enough to insert the first ignitor 4 and fix the portion of its tube 17 into the inside of the partition cup 15.

When the both ignitors 4 and 5 are fixed to the housing 1, the depth of the concave portion 48 and the position of the hole 49 should be considered so as to align the respective tubes 17 of the both ignitors 4 and 5 at the position of substantially same height.

A dish-shaped lid member 18 is provided along the inner surface of the top portion 2a of the upper container. The lid member 18 forms the first combustion chamber 41 by being jointed with the second partition member 15b by welding or welding with pressure.

A first inner cylindrical member 8 is provided in the inside of the partition cup 15. An annular space S1 is formed between the inner surface of the second partition member 15b and the outer surface of the first inner cylindrical member 8.

Further, a first annular cooling/filtering member 6 is provided in the inside of the first inner cylindrical member 8 along its inner peripheral surface. The inside of the first annular cooling/filtering member 6 is charged with gas generants 16. The first combustion chamber 41 is substantially formed in the inside of the first annular cooling/filtering member 6.

The first cooling/filtering member 6 is restrained not to move inwardly, by projections 46 and 47 formed on the first partition member 15a and the lid member 18. Thus, the first inner cylindrical member 8 and the first cooling/filtering member 6 are provided at each predetermined position within the housing 1.

The projections 46 and 47 work to position the first cooling/filtering member 6 and to make all the combustion gas of the gas generants 16 burnt in the first combustion chamber 41 pass through the first cooling/filtering member 6. Namely, the projections 46 and 47 can prevent the combustion gas of the gas generants 16 from passing through an interstice between the first cooling/filtering member 6 and the first partition member 15a and an interstice between the first cooling/filtering member 6 and the lid member 18, and they can make all the gas pass through the first cooling/filtering member 6.

A plurality of gas passage holes 10 for passing the gas coming through the first cooling/filtering member 6 are provided in the first inner cylindrical member 8. The gas passage holes 10 communicate substantially with the first combustion chamber 41 and the annular space S1. The first inner cylindrical member 8 is made by cylindrically shaping, for example, a porous metal plate (punching metal), an expanded metal, and the like. The height of the first inner cylindrical member 8 ranges from the first partition member 15a to the vicinity of the lid member 18.

The first inner cylindrical member 8 is fixed to the outer peripheral surface of the first cooling/filtering member 6. When the gas is generated in the first combustion chamber 41, the first inner cylindrical member 8 supports the first cooling/filtering member 6 so as to prevent the first cooling/filtering member 6 from expanding outward due to the force of the gas generation.

The height of the first cooling/filtering member 6 ranges from the first partition member 15a to the vicinity of the lid member 18. The first cooling/filtering member 6 can be manufactured at a low cost, by pressing, for example, a metal wire of stocking stitch, a metallic material of plain fabric, or aggregation of crimped metal wire rods into cylindrical shape.

The gas generants 16 charged in the first cooling/filtering member 6 produce a high-temperature gas by combustion. The charged amount is adjusted at an amount capable of controlling the inflation and expansion of the airbag.

A second inner cylindrical member 9 is provided inside of the side portion 3b of the lower container 3. Further, a second annular cooling/filtering member 7 is provided in the inside of the second inner cylindrical member 9 along its inner peripheral surface. The third partition member 23 is fitted between the second cooling/filtering member 7 and the first partition member 15a. An annular space S2 is formed between the inner peripheral surface of the side portion 3b of the lower container 3 and the outer peripheral surface of the second inner cylindrical member 9. The annular space S2 communicates with the enclosed space A through a plurality of orifices 13 provided in the third partition plate 23.

The inside of the second annular cooling/filtering member 7 is charged with the gas generants 16. The second combustion chamber 42 is substantially formed in the inside of the second annular cooling/filtering member 7.

The second cooling/filtering member 7 is restrained not to move inwardly, by projections 53 and 54 respectively formed on the bottom portion 3a of the lower container and the first partition member 15a. Thus, the second inner cylindrical member 9 and the second cooling/filtering member 7 are provided at each predetermined position within the housing 1.

The projections 53 and 54 work to position the second cooling/filtering member 7 and to make all the combustion gas of the gas generants 16 burnt in the second combustion chamber 42 pass through the second cooling/filtering member 7. Namely, the projections 53 and 54 can prevent the combustion gas of the gas generants 16 from passing through an interstice between the second cooling/filtering member 7 and the first partition member 15a and an interstice between the second cooling/filtering member 7 and the lower container 3, and they can make all the gas pass through the second cooling/filtering member 7.

A plurality of gas passage holes 11 for passing the gas coming through the second cooling/filtering member 7 are provided in the second inner cylindrical member 9. The gas passage holes 11 communicate substantially with the second combustion chamber 42 and the annular space S2. The second inner cylindrical member 9 is made by cylindrically shaping, for example, a porous metal plate (punching metal), an expanded metal, and the like. The height of the second inner cylindrical member 9 ranges from the bottom portion 3a of the lower container to the vicinity of the first partition member 15a.

The second inner cylindrical member 9 is fixed to the outer peripheral surface of the second cooling/filtering member 7. When the gas is generated in substantially the second combustion chamber 42, the second inner cylindrical member 9 supports the second cooling/filtering member 7 so as to prevent the second cooling/filtering member 7 from expanding outward due to the force of the gas generation.

The height of the second cooling/filtering member 7 ranges from the bottom portion 3a of the lower container to the vicinity of the first partition member 15a. The second cooling/filtering member 7 can be manufactured at a low cost, by pressing, for example, a metal wire of stocking stitch, a metallic material of plain fabric, or aggregation of crimped metal wire rods into cylindrical shape.

The gas generants 16 charged in the inside of the second cooling/filtering member 7 produce a high-temperature gas through combustion. The charged amount is adjusted at an amount capable of controlling the inflation and expansion of the airbag.

Further, it is preferable that the total sum of the aperture areas of all the gas discharge holes 14 is set larger than the total sum of the aperture areas of all the orifices, in order to release all the pressure within the housing 1 when discharging the combustion gas.

The first and second ignitors 4 and 5 are fitted in the first and second holes 51 and 52 provided in the bottom portion 3a of the lower container respectively through first and second holders 19 and 20 for ignitor.

The respective first and second holders 19 and 20 are cylindrical members having pedestals of the respective first and second ignitors. After the respective first and second ignitors 4 and 5 are installed in the respective pedestals, calking projections 43 and 44 respectively provided in the first and second holders 19 and 20 are calked toward the first and second ignitors 4 and 5, thereby fixing the ignitors in the first and second holders.

The first and second ignitors 4 and 5 have cup-shaped tubes 17 which accommodate each bridge circuit line and ignition material. The respective first and second ignitors 4 and 5 individually burn the gas generants 16 filled in the respective first and second combustion chambers 41 and 42.

The first and second holders 19 and 20 are inserted into the first and second holes 51 and 52 in a way of protruding from the inner surface of the lower container 3. Their bottom portions are jointed with the first and second holes 51 and 52 by welding and the like, thereby fixing the first and second holders 19 and 20 within the housing 1.

Further, the upper portion of the first holder 19 is inserted into the hole 49 of the first partition member 15a. The calking projection 45 is calked toward the inside of the partition member 15. This fixes the tube 17 of the first ignitor 4 in the first combustion chamber 41.

The tube 17 of the second ignitor 5 is accommodated into the concave portion 48 of the partition member 15, in the second combustion chamber 42.

As the first and second ignitors 4 and 5, pin typed squibs are used. In the pin typed squibs, lead pins 21 and 22 are connected to an external connector, not illustrated, hence to supply electricity to the bridge circuit line accommodated into the cup shaped tube 17 and then ignite the ignition material accommodated in the tube 17.

As the first and second ignitors 4 and 5, pig-tail typed squib and the like can be also used, in addition to the pin typed squib. In the pig-tail typed squib, lead lines are used instead of the lead pins 21 and 22. The lead lines are drawn to the outside of the housing and a connector on the side of the gas generator is attached to these distal ends. By connecting the gas generator-side connector with a mobile-side connector, the ignitors are connected to a control unit of an operating unit of the gas generator, not illustrated.

The gas generator P1 thus constituted is built in an airbag module installed in a steering wheel. At this time, the airbag, not illustrated, is attached to the flange portion 3c so that the discharge gas can flow from the gas discharge holes 14 into the airbag so as to cover the upper container 2 of the gas generator P1.

The first and second ignitors 4 and 5 of the gas generator P1 are respectively connected to the mobile-side connector, not illustrated, and connected to the control unit.

The control unit comprises a collision sensor such as an acceleration sensor for detecting a collision of an automobile, a booster circuit for passing a current to the first and second ignitors 4 and 5, a backup condenser, and a driving circuit of ignitor such as squib and the like, and it is controlled by a microcomputer.

This time, the operation of the gas generator P1 connected to the control unit will be described.

When the collision sensor detects a collision of an automobile, the ignitor driving circuit connected to the second ignitor 5 turns on the electricity of the second ignitor 5 only and ignites it. The gas generant 16 within the second combustion chamber 42 is burnt to generate a high temperature gas.

The high temperature gas generated within the second combustion chamber 42 flows into the second cooling/filtering member 7. After passing through the slag collection and cooling process here, it flows into the annular space S2 from the respective gas passage holes 11 provided in the second inner cylindrical member 9. The gas flown into the annular space S2 is dispersed uniformly. The gas dispersed uniformly passes through the orifices 13 provided in the third partition member 23 and flows into the enclosed space A.

At this time, the orifices 13 can control the amount of the combustion gas flowing into the enclosed space A so that it may become uniform in the circumferential direction of the housing 1. Further, by controlling the discharge amount of the combustion gas passing through the orifices 13, it is possible to make stable the combustion of the gas generant 16 within the second combustion chamber 42.

The combustion gas flown into the enclosed space A once stays there. Then, the pressure of the combustion gas is increased within the enclosed space A, hence to uniformly discharge the gas from the gas discharge holes 14 at once in the circumferential direction of the housing 1. As a result, the airbag starts to expand uniformly. In this stage, since only the gas generant 16 within the second combustion chamber 42 is burnt, the airbag starts to expand and inflate slowly.

Continuously, after burning in the second combustion chamber 42, the ignitor 4 is turned on by the ignitor driving circuit controlled by the microcomputer of the control unit, with a small time difference, and ignited. The inflammation is spouted into the first combustion chamber 41, to burn the gas generant 16, hence to generate a high temperature gas.

The high temperature gas generated within the first combustion chamber 41 flows into the first cooling/filtering member 6 and after passing through the slag collection and cooling process, it flows into the enclosed space S1. Then, the gas flown into the annular space S1 flows into the enclosed space A from the orifices 12 provided in the second partition member 15b.

Also here, the orifices 12 can control the amount of the combustion gas flowing into the enclosed space A so that it may become uniform in the circumferential direction of the housing 1. Further, by controlling the discharge amount of the combustion gas passing through the orifices 12, it is possible to make stable the combustion of the gas generant 16 within the first combustion chamber 41.

The combustion gas flown into the enclosed space A stays once and gathers there together with the gas flown from the second combustion chamber 42.

Then, the pressure of the combustion gas is further increased within the enclosed space A and immediately discharged from the gas discharge holes 14, into the circumferential direction of the housing 1 uniformly. As a result, the airbag is expanded rapidly and uniformly. In this stage, the gas generated in the first combustion chamber 41 and the gas generated in the second combustion chamber 42 gather together in the enclosed space A and a large amount of gas is discharged from the gas discharge holes 14, hence to expand and inflate the airbag rapidly.

In the gas generator P1 as mentioned above, the cooling/filtering members are respectively provided in the combustion chambers, and since the respective cooling/filtering members perform the collection of slag generated in the respective combustion chambers and the cooling of the generated gas, it is possible to discharge the pure gas.

Further, when the total sum of the aperture areas of all the gas discharge holes 14 is set larger than the total sum of the aperture areas of all the orifices in order to release all the pressure from the housing 1 at a discharge time of the combustion gas, it is possible to keep a balance between the gas amount passing through the orifices 12 and 13 and the gas amount passing through the gas discharge holes 14 and discharge the gas smoothly. As a result, it is possible to make the plate of the housing 1 thinner and make the gas generator small and light.

As for the order of operating the first and second ignitors 4 and 5, although the example of operating the second ignitor 5 first has been described in the above embodiment, the first ignitor 4 may be operated first. Further, it is not always necessary to operate the ignitors 4 and 5 with a small time difference but the both ignitors may be operated at the same time according to the way of automobile collision, and this is properly selected.

For example, in a very dangerous collision such as a head-on collision and a frontal crash in a highway, the both ignitors 4 and 5 are simultaneously powered, operated, and ignited. The airbag is rapidly expanded and inflated by the total sum of the gas amount generated in the both combustion chambers 41 and 42, namely by a large amount of gas.

In a collision of a medium degree of danger, the ignitors 4 and 5 are powered with a small time difference, operated and ignited. In the initial stage of expanding the airbag, it is slowly expanded and inflated by a small amount of gas and after a little time, it is rapidly expanded and inflated by a large amount of gas.

In a collision of a small danger, for example, only one ignitor is powered, operated, and ignited. The airbag is slowly expanded and inflated by a small amount of gas for a comparatively long time.

Thus, according to the embodiment, by selecting the timing of the respective ignitors 4 and 5, the amount of the generated gas can be adjusted. As a result, it is possible to control the expansion and inflation of the airbag. Further, thanks to the several orifices 12 and 13 respectively provided in the combustion chambers 41 and 42, the discharge amount of the gas can be controlled, and before the combustion gas is discharged from the gas discharge holes 14, it stays once in the enclosed space A. After the stay, the uniform amount of combustion gas is discharged to the airbag.

Further, in the above embodiment, although the number of the combustion chambers and ignitors is two, the housing may be divided into the combustion chambers of the other number corresponding to the number of the ignitors. The number of the ignitors may be properly determined according to the use and the environment.

### [Second Embodiment]

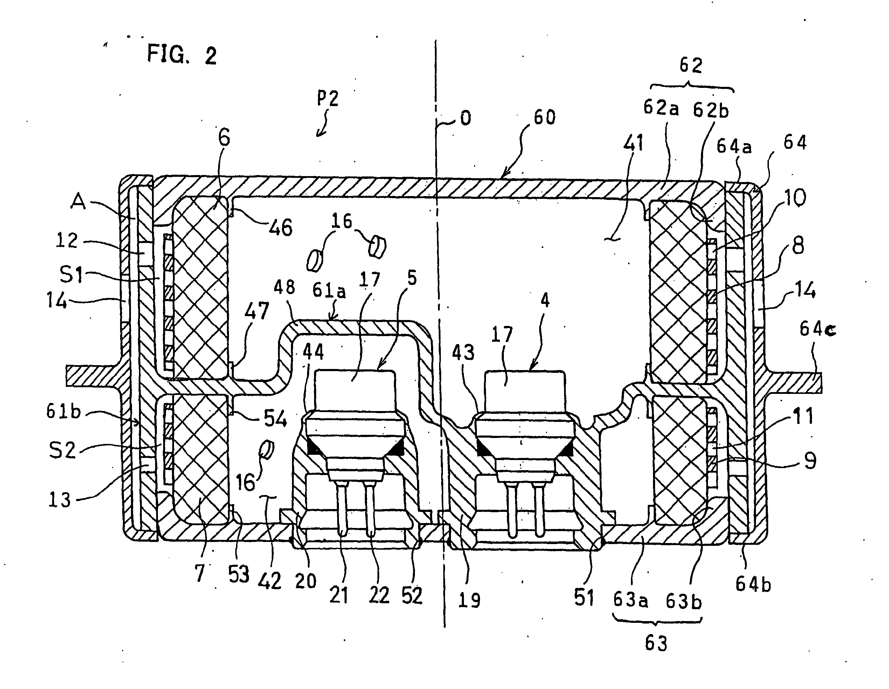

Fig. 2 shows a cross sectional view of a gas generator P2 according to the second embodiment of the invention. Here, a different point from the gas generator P1 shown in Fig. 1 will be described and the description of the same point as in Fig. 1 is omitted.

The gas generator P2 comprises a housing 60, first and second partition members 61a and 61b, first and second cooling/filtering members 6 and 7, first and second ignitors 4 and 5, and first and second inner cylindrical members 8 and 9.

The housing 60 is a short cylindrical body having a top member 62, a bottom member 63, and a side member 64 of cylinder, in the vertical direction. The top member 62, the bottom member 63, and the side member 64 are jointed with the second partition member 61b by welding or welding with pressure, and the housing 60 is enclosed. In Fig. 2, the reference numeral 0 indicates the axis of the cylindrical housing 60.

The top member 62 has a substantially disk plate 62a and a flange 62b provided around the whole circumference of the disk plate 62a. The flange 62b is substantially vertically protrudent downward from the circumferential edge of the disk plate 62a. 'The same projection 46 as in Fig. 1, for restraining the first cooling/filtering member 6, is provided on the inner surface of the top member 62.

The bottom member 63 has a substantially disk plate 63a and a flange 63b provided around the whole circumferential edge of the disk plate 63a. The flange 63b is substantially vertically protrudent upward from the circumferential edge of the disk plate 63a. The same projection 53 as in Fig. 1, for restraining the first cooling/filtering member 7, is provided on the inner surface of the bottom member 63. First and second holes 51 and 52 are formed in the bottom member 63a at an eccentric position from the axis 0. The first and second holes 51 and 52 are holes for accommodating the first and second ignitors 4 and 5, similarly to the first and second holes 51 and 52 of Fig. 1.

The diameter of the top member 62 agrees with the diameter of the bottom member 63.

The top member 62 and the bottom member 63 are inserted into the second cylindrical partition member 61b, described later, from its upper and lower ends, and the flanges 62b and 63b are jointed with the inner peripheral surface of the second cylindrical partition member 61b by welding or welding with pressure.

The diameter of the inner circumference of the side member 64 has to be large enough to form an enclosed space between the outer peripheral surface of the second cylindrical partition member 61b and itself. The second cylindrical partition member 61b is inserted into the side member 64. The upper and lower end portions 64a and 64b of the side member 64 are bent toward the second partition member 61b so as to pinch the upper and lower ends of the second cylindrical member 61b while securing the enclosed space A. The upper and lower ends of the second cylindrical partition member 61b are jointed with the upper and lower end portions 64a and 64b of the side member 64 by welding or welding with pressure. The distal ends of the upper and lower end portions 64a and 64b respectively abut to the top member 62 and the bottom member 63.

A plurality of gas discharge holes 14 are provided in the side member 64 in the circumferential direction. The gas discharge holes 14 are bored in the direction at right angles to the axis 0 of the cylindrical housing 60. Further, a flange 64c is provided in the side member 64 below the gas discharge holes 14. The flange 64c extends outward in the direction substantially at right angles to the axis 0 of the housing 60. A retainer and the like (not illustrated) of airbag module is attached to the flange 64c.

The space of the housing is divided into two of the first and second combustion chambers 41 and 42 aligned up above the other in the direction of the axis 0, by the first and the second partition members 61a and 61b. The second partition member 61b forms the first and second combustion chambers 41 and 42 together with the first partition member 61a. The second partition member 61b separates the enclosed space A from the first and second combustion chambers 41 and 42.

The second partition member 61b is a cylindrical body. The diameter of the inner circumference of the second partition member 61b substantially agrees with the diameter of the outer circumference of the top member 62 and the bottom member 64 of the housing.

A plurality of the orifices 12 for the first combustion chamber 41 are provided in the upper portion in the circumferential direction. A plurality of the orifices 13 for the second combustion chamber 42 are provided in the lower portion in the circumferential direction. All the orifices 12 and 13 are bored in the direction at right angles to the axis 0. An annular enclosed space A is formed between the outer circumferential surface of the second partition member 61b and the inner circumferential surface of the side member 64.

The first partition member 61a is a disk plate having the diameter substantially identical to the inner diameter of the second partition member 61b. The first partition member 61a is the same as the first partition member 15a. The other point than the point described below is the same as the first partition member 15a of Fig. 1. The same projections 47 and 54 as in Fig. 1, for restraining the first and second cooling/filtering members 6 and 7, are provided in the first partition member 61a at the opposite sides. The same holder 19 as the first holder 19 of Fig. 1 is provided integrally with the first partition member 61a. Here, the holder 19 and the first partition member 61a may be provided separately in the same way as in Fig. 1.

The first partition member 61a is inserted into the second partition member 61b, and it is connected to the second partition member 61b at a predetermined position between the orifices 12 for the first combustion chamber and the orifices 13 for the second combustion chamber.

Further, the first partition member 61a and the second partition member 61b may be separately formed, but in this embodiment, they are integrally formed.

The same concave portion 48 as in Fig. 1 is provided in the first partition member 61a at an eccentric position from the axis 0 of the housing 60.

The same first inner cylindrical member 8 as in Fig. 1 is provided in the first combustion chamber 41. The annular space S1 is formed between the inner peripheral surface of the second partition member 61b and the outer peripheral surface of the first inner cylindrical member 8. The annular space S1 communicates with the enclosed space A through the orifices 12 provided in the second partition member 61b.

Further, the same first annular cooling/filtering member 6 as in Fig. 1 is provided in the inside of the first inner cylindrical member 8 along its inner peripheral surface. The inside of the first cooling/filtering member 6 is charged with the same gas generants 16 as in Fig. 1. The inside of the first annular cooling/filtering member 6 substantially becomes the first combustion chamber 41. The height of the first inner cylindrical member 8 ranges from the first partition member 61a to the vicinity of the flange 62b of the top member 62. The height of the first cooling/filtering member 6 ranges from the first partition member 61a to the vicinity of the top member 62.

The same second inner cylindrical member 9 as in Fig. 1 is provided in the inside of the second combustion chamber 42. Further, the same second annular cooling/filtering member 7 as in Fig. 1 is provided in the inside of the second inner cylindrical member 9 along its inner circumferential surface.

The annular space S2 is formed between the inner peripheral surface of the second partition member 61b and the outer peripheral surface of the second inner cylindrical member 9. The annular space S2 communicates with the enclosed space A through the orifices 13 provided in the second partition plate 61b.

The inside of the second annular cooling/filtering member 7 is charged with the same gas generant 16 as in Fig. 1. The inside of the second annular cooling/filtering member 7 substantially becomes the second combustion chamber 42.

The height of the second inner cylindrical member 9 ranges from the bottom member 63 to the vicinity of the first partition member 61a. The height of the second cooling/filtering member 7 ranges from the bottom member 63 to the vicinity of the first partition member 61a.

Further, it is preferable to set the total sum of the aperture areas of all the gas discharge holes 14 larger than the total sum of the aperture areas of all the orifices, so as to release all the pressure within the housing 60 at a discharge time of the combustion gas.

### [Third Embodiment]

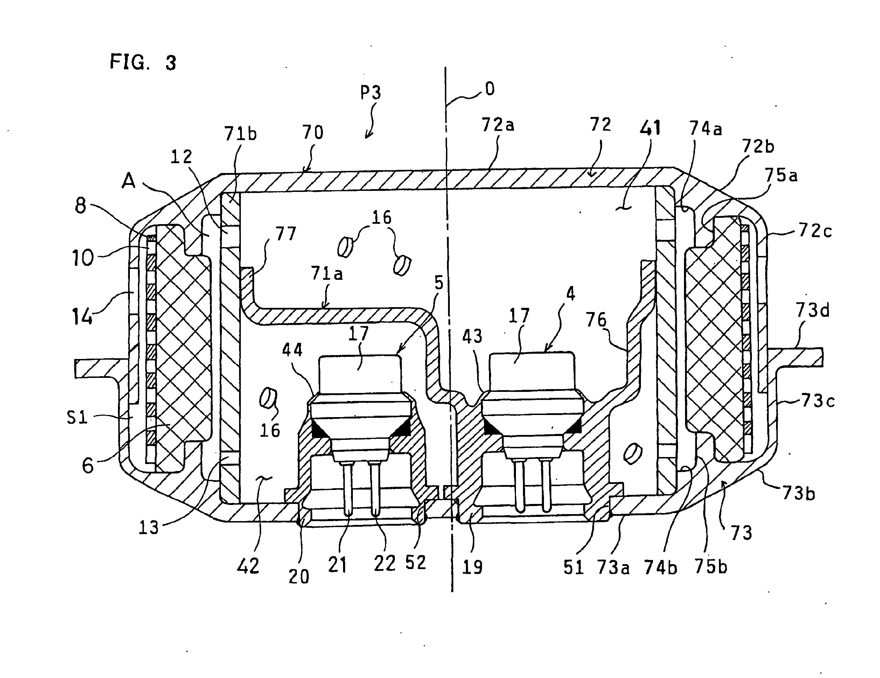

Fig. 3 shows a cross sectional view of a gas generator P3 according to a third embodiment of the invention. Here, a different point from the gas generators P1 and P2 shown in Fig. 1 and Fig. 2 will be described and the description of the same point as in Fig. 1 and Fig. 2 is omitted.

The gas generator P3 comprises a housing 70, first and second partition members 71a and 71b, a cooling/filtering member 6, first and second ignitors 4 and 5, and an inner cylindrical member 8.

The housing 70 is a short cylindrical body having a top surface and a bottom surface in the vertical direction. In Fig. 3, the reference numeral 0 indicates the axis of the cylindrical housing 70. The housing 70 consists of an upper container 72 and a lower container 73. The upper container 72 and the lower container 73 are jointed to each other by welding or welding with pressure, thereby enclosing the housing 70.

The upper container 72 has a top portion 72a of substantially disk plate, a taper portion 72b gradually expanding downwardly from the top portion 72a of the disk plate, and a side portion 72c of a cylindrical body substantially extending downward from the edge of the taper portion 72b in the vertical direction. A plurality of gas discharge holes 14 are provided on the side portion 72c in the circumferential direction. The gas discharge holes 14 are bored in the direction at right angles to the axis 0 of the cylindrical housing 70. The whole shape of the upper container 72 is like a short cup with its opening set downward having a taper at the corner.

The lower container 73 has a bottom portion 73a of substantially disk plate, a taper portion 73b gradually expanding upwardly from the bottom portion 73a of the disk plate, a side portion 73c of a cylindrical body substantially extending downward from the edge of the taper portion 73b in the vertical direction, and a flange portion 73d provided in the upper end of the side portion 73c of the cylindrical body.

The diameter of the top portion 72a of the upper container agrees with the diameter of the bottom portion 73a of the lower container. The flange portion 73d extends outward in the direction substantially at right angles to the axis 0 of the housing 70. In the bottom portion 73a, first and second holes 51 and 52 are formed at an eccentric position from the axis 0. The first and second holes 51 and 52 are holes for accommodating the first and second ignitors 4 and 5 in the same way as the first and second holes 51 and 52 of Fig. 1.

The whole shape of the bottom container 3 of the housing 1 is like a short cup with its opening set upward. The top portion 72a, the side portion 72c, and the taper portion 72b of the upper container form a top surface, an upper side surface, and a corner between the top surface and the side surface. The bottom portion 73a, the side portion 73c, and the taper portion 73b of the lower container 73 respectively form the bottom surface, the lower side surface, and the corner between the bottom surface and the lower side surface of the housing 1. A retainer and the like (not illustrated) of an airbag module is fitted to the flange portion 73d.

A stepped portion 74a protrudent inwardly is continuously provided in the inside of the upper container 72 in a boundary of the top portion 72a and the taper portion 72b in the circumferential direction. A projection 75a protrudent downwardly and continuously from the stepped portion 74a is continuously provided in the circumferential direction.

A stepped portion 74b protrudent inwardly is continuously provided in the inside of the lower container 73 in a boundary of the bottom portion 73a and the taper portion 73b in the circumferential direction. The stepped portion 74b and the stepped portion 74a of the upper container 72 face to each other. A projection 75b protrudent upwardly and continuously from the stepped portion 74b is continuously provided in the circumferential direction. The projection 75b and the projection 75a of the upper container 72 face to each other.

The stepped portions 74a and 74b are provided to determine the position of the second partition member 71b within the housing 70. Further, the stepped portions 74a and 74b prevent the gas from flowing out from an interstice between the top portion 72a and the second partition member 71b and an interstice between the bottom portion 73a and the second partition member 71b.

The projections 75a and 75b are provided to determine the position of the cooling/filtering member 6 within the housing 70. Further, the projections 75a and 75b are apart from the stepped portions 74a and 74b enough to be able to form an enclosed space A between the second partition member 71b and the cooling/filtering member 6. Further, the projections 75a and 75b prevent the gas from flowing out from the interstices between the cooling/filtering member 6 and the respective taper portions 72b and 73b without passing through the cooling/filtering member 6.

The space within the housing 70 is divided by the first and second partition members 71a and 71b into two of the first and second combustion chambers 41 and 42 aligned up above the other in the direction of the axis 0.
The second partition member 71b forms the first and second combustion chambers 41 and 42 together with the first partition member 71a. The second partition member 71b separates the enclosed space A from the first and second combustion chambers 41 and 42.

The second partition member 71b is a cylindrical body, and the height ranges from the inner surface of the top portion 72a to the vicinity of the inner surface of the bottom portion 73b. The diameter of the outer circumference of the second partition member 71b substantially agrees with the diameter of each concave portion formed by the stepped portions 74a and 74b of the housing. The both ends of the second partition member 71b are respectively inserted into the concave portions formed by the stepped portions 74a and 74b.

A plurality of orifices 12 for the first combustion chamber 41 are provided in the upper portion of the second partition member 71b in the circumferential direction. A plurality of orifices 13 for the second combustion chamber 42 are provided in the lower portion of the second partition member 71b in the circumferential direction. All the orifices 12 and 13 are bored in a direction at right angles to the axis 0.

The first partition member 71a is a disk plate having the diameter substantially identical to the inner diameter of the second partition member 71b. A hole 76 is provided in the first partition member 71a at an eccentric position from the axis 0 of the housing 70. The hole 76 is large enough to be able to accommodate the first ignitor 4 and fix the portion of its tube 17 within the first combustion chamber 41.

The same holder 19 as the first holder 19 of Fig. 1 is provided in the hole 76 integrally with the first partition member 71a. Here, the holder 19 and the first partition member 61a may be provided separately in the same way as in Fig. 1.

A flange 77 is provided, extending upwardly from the circumferential edge portion of the first disk partition member 71a.

The first partition member 71a is inserted into the second partition member 71b and the flange 77 is abutted to the inner peripheral surface of the second partition member 71b at a predetermined position between the orifices 12 for the first combustion chamber and the orifices 13 for the second combustion chamber.

The cooling/filtering member 6 is provided around the outer peripheral portion of the second partition member 71b. The cooling/filtering member 6 is positioned, restrained by the projections 75a and 76b, so as to form the enclosed space A between the outer peripheral surface of the second partition member 71b and the inner peripheral surface of the cooling/filtering member 6. The same material as that of the cooling/filtering member 6 of Fig. 1 is used for the cooling/filtering member.

The inner cylindrical member 8 is provided around the outer peripheral portion of the cooling/filtering member 6. A plurality of gas passage holes 10 for passing the gas coming through the cooling/filtering member 6 are provided in the inner cylindrical member 8. The diameter of the inner cylindrical member 8 is determined so as to form the annular space S1 for dispersing the combustion gas between the outer peripheral surface of the inner cylindrical member 8 and the inner peripheral surface of the side portion of the housing 70. The annular space S1 communicates with the enclosed space A through the gas passage holes 10 of the inner cylindrical member 8. The same material as that of the inner cylindrical member 8 of Fig. 1 is used for the inner cylindrical member 8.

The height of the inner cylindrical member 8 and the height of the cooling/filtering member 6 range from the vicinity of one taper portion 72b to the vicinity of the other taper portion 73b.

The first and second combustion chambers 41 and 42 in the inside of the second partition member 71b are charged with the same gas generants 16 as in Fig. 1.

Further, it is preferable to set the total sum of the aperture areas of all the gas discharge holes 14 larger than the total sum of the aperture areas of all the orifices so as to release all the pressure within the housing 70 at a discharge time of the combustion gas.

The gas generator P3 according to the third embodiment is provided with the cooling/filtering member 6 in the outside of the orifices 12 and 13, differently from the above first and second embodiments. Therefore, it is not necessary to provide with the cooling/filtering member in every combustion chamber 41 and 42, but only one cooling/filtering member has to be provided. Further, the enclosed space A for staying the both gas discharged from the combustion chambers 41 and 42 is formed between the inner peripheral surface of the cooling/filtering member 6 and the outer peripheral surface of the second partition member 71b. Further, the dispersion space S1 is also formed between the outer peripheral surface of the cooling/filtering member 6 and the side portion 72c of the upper container 72.

In the gas generator P3 according to the third embodiment, the gas generated by burning the gas generants 16 charged in the respective combustion chambers 41 and 42 goes through the respective orifices 12 and 13, and it is discharged into the enclosed space A. Having passed through the respective orifices 12 and 13, the gas stays in the enclosed space A and then passes through the cooling/filtering member 6, and it is discharged from the gas discharge holes 14 bored in the direction at right angles to the axis 0 of the housing 70 uniformly in the circumferential direction. Thus, it is possible to cool the generated gas and collect the slag and the like efficiently because the gas generated in the respective combustion chambers 41 and 42 passes through the cooling/filtering member 6 after staying in the enclosed space A.

### [Fourth Embodiment]

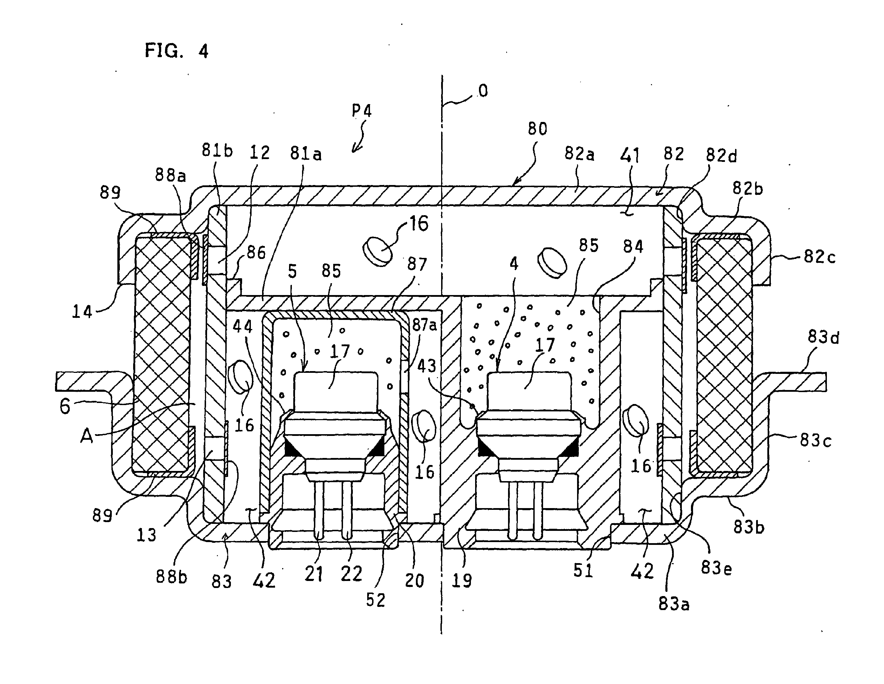

Fig. 4 shows a cross sectional view of a gas generator P4 according to a fourth embodiment of the invention. Here, a different point from the gas generators P1, P2, and P3 shown in Fig. 1, Fig. 2, and Fig. 3 will be described and the description of the same point as in Fig. 1, Fig. 2, and Fig. 3 is omitted.

The gas generator P4 comprises a housing 80, first and second partition members 81a and 81b, a cooling/filtering member 6, and first and second ignitors 4 and 5.

The housing 80 is a short cylindrical body having a top surface and a bottom surface in the vertical direction. In Fig. 4, the reference numeral 0 indicates the axis of the cylindrical housing 80. The housing 80 consists of an upper container 82 and a lower container 83.

The upper container 82 has a top portion 82a of substantially disk plate, a stepped portion 82b one step down while expanding from the disk top portion 82a, and a side portion 82c of a cylindrical body substantially extending downward from the circumferential edge of the stepped portion 82b in the vertical direction.

The whole shape of the upper container 82 is like a short cup with its opening downward having a stepped portion at the corner.

The lower container 83 has a bottom portion 83a of substantially disk plate, a stepped portion 83b one step up while expanding from the top portion 83a of the disk plate, a side portion 83c of the cylindrical body substantially extending upward from the circumferential edge of the stepped portion 83b in the vertical direction, and a flange 83d provided in the upper end of the side portion 83c of the cylindrical body. The whole shape of the lower container 3 of the housing 1 is like a short cup with its opening upward.

The flange 83d extends outward in the direction substantially at right angles to the axis 0 of the housing 80. In the bottom portion 83a, first and second holes 51 and 52 are formed at an eccentric position from the axis 0. The first and second holes 51 and 52 are holes for accommodating the first and second ignitors 4 and 5 in the same way as the first and second holes 51 and 52 of Fig. 1.

The top portion 82a, the side portion 82c, and the stepped portion 82b of the upper container respectively form the top surface, the upper side surface, and a corner between the top surface and the side surface. The bottom portion 83a, the side portion 83c, and the stepped portion 83b of the lower container 83 respectively form the bottom surface, the lower side surface, and the corner between the bottom surface and the lower side surface of the housing 80. A retainer and the like (not illustrated) of an airbag module is fitted to the flange portion 83d.

The diameter of the top portion 82a of the upper container agrees with the diameter of the bottom portion 83a of the lower container. The stepped portions 82b and 82b form the concave portions 82d and 83e facing to each other in the inside of the upper container and the lower container. The second partition member 81b is a cylindrical body, and the diameter of its outer circumference substantially agrees with each diameter of the concave portions 82d and 83e. The both ends of the second partition member 81b are respectively inserted in the concave portions 82d and 83e. The second partition member 81b is pinched by the upper container 82 and the lower container 83, and the upper and lower end portions of the second partition member 81b are fixed there, for example, by welding or conflicting power with pressure, thereby forming the housing 80.

A space between the distal end of the side portion 82c of the upper container 82 and the distal end of the side portion 83c of the lower container 83 becomes a gas discharge hole 14, extending in the circumferential direction. The gas discharge hole 14 is bored in the direction at right angles to the axis 0 of the housing 80.

The stepped portions 82b and 83b are provided to determine the position of the second partition member 81b within the housing 80. Further, the stepped portions 82b and 83b prevent the gas from flowing out from an interstice between the top portion 82a and the second partition member 81b and an interstice between the bottom portion 83a and the second partition member 81b.

The space within the housing 80 is divided into two of the first and second combustion chambers 41 and 42 aligned up above the other in the direction of the axis 0, by the first and second partition members 81a and 81b. The second partition member 81b forms the first and second combustion chambers 41 and 42 together with the first partition member 81a. Further, the second partition member 81b separates the enclosed space A from the first and second combustion chambers 41 and 42. The same gas generants 16 as those of Fig. 1 are charged in the first and second combustion chambers 41 and 42.

The height of the second partition member 81b ranges from the inner surface of the top portion 82a to the vicinity of the inner surface of the bottom portion 83b. A plurality of orifices 12 for the first combustion chamber 41 are provided in the upper portion of the second partition member 81b in the circumferential direction. A plurality of orifices 13 for the second combustion chamber 42 are provided in the lower portion of the second partition member 71b in the circumferential direction. All the orifices 12 and 13 are bored in the direction at right angles to the axis 0.

The first partition member 81a is a disk plate having the substantially same diameter as the inner diameter of the second partition member 81b. A hole is bored in the first partition member 81a at an eccentric position from the axis 0 of the housing 80. A short storage tube 84 extending downward is formed in this hole portion. Further, the same holder 19 as the first holder 19 of Fig. 1 is connected to the lower end of the storage tube 84. The storage tube 84, where the first ignitor 4 is inserted, is large enough to be able to accommodate its tube 17 portion and inflammable agents 85, on the side of the first combustion chamber. The inflammable agents 85 are charged around the tube 17 within the storage tube 84.

In the fourth embodiment, the first partition member 81a, the storage tube 84, and the first holder 19 are integrally formed. Alternatively, the first partition member 81a, the storage tube 84, and the first holder 19 may be separately provided and air-tightly fixed by caulking, welding, or the like.

A flange 86 extending upward is provided from the circumferential edge portion of the first disk partition member 81a. The first partition member 81a is inserted into the second partition member 81b, and the flange 86 is attached to the inner peripheral surface of the second partition member 81b at a predetermined position between the orifices 12 for the first combustion chamber and the orifices 13 for the second combustion chamber.

On the side of the second combustion chamber 42, the second ignitor 5, together with a second holder 20, is covered with a case cover 87. The case cover 87 is a cylindrical body having the top surface, and a hole 87a is provided on the side surface of the cylindrical body. Within the case cover 87, the inflammable agents 85 are charged around the tube 17 of the second ignitor 5.

The cooling/filtering member 6 is provided on the outlet side of the orifices 12 and 13. The same material as the cooling/filtering member 6 of Fig. 1 is used for the cooling/filtering member. The cooling/filtering member 6 is attached between the stepped portions 82b and 83b formed in the upper container 82 and the lower container 83. The height of the cooling/filtering member 6 ranges from the stepped portion 82b of the upper container to the vicinity of the stepped portion 83b of the lower container 83.

The length of the stepped portions 82b and 83b and the thickness of the cooling/filtering member 6 are adjusted so as to form an enclosed space A between the inner peripheral surface of the cooling/filtering member 6 and the second partition member 81b. Further, in order to secure the enclosed space A, the position of the cooling/filtering member 6 is restrained by supporting members 89 not to move inward. The supporting members 89 are rings each having an L-shaped cross section, and cover the upper and lower corners of the cooling/filtering member 6 on the side of the inner periphery. The supporting members 89 support the cooling/filtering member 6 and prevent from the damage of the filter owing to the gas discharged from the orifices. Further, the supporting members 89 play a role of making all the gas discharged from the orifices 12 and 13 pass through the cooling/filtering member 6. The gas having passed through the cooling/filtering member 6 is discharged from the gas discharge hole 14 provided between the upper container 82 and the lower container 83.

First and second restraining members for covering the orifices 12 and 13 for the first combustion chamber and the second combustion chamber are respectively provided in the orifices 12 and 13 for the first combustion chamber and the second combustion chamber of the second partition member 81b. The first and second restraining members 88a and 88b explode when the first and second combustion chambers 41 and 42 reach a predetermined pressure.

As the restraining member, there are first and second burst plates 88a and 88b and first and second seal members.

The following is the reason why the restraining members 88a and 88 are provided.

When the gas generated in the combustion chamber to be ignited at first, for example, in the second combustion chamber 42, flows into the enclosed space A, the first restraining member 88a prevents the gas from flowing into the first combustion chamber 41 next to be ignited, through the orifices 12 for the first combustion chamber.

When igniting the first combustion chamber 41 at first, the second restraining member 88b prevents the gas generated in the first combustion chamber 41 from flowing into the second combustion chamber 42 through the orifices 13. The first and second restraining members 88a and 88b may be provided on any side of the outer periphery and the inner periphery of the second partition member 81a.

Further, it is preferable to set the total sum of the aperture areas of the whole gas discharge holes 14 larger than the total sum of the aperture areas of all the orifices, so as to release all the pressure from the housing 80 at a discharge time of the combustion gas.

The gas generator P4 of the fourth embodiment is provided with the cooling/filtering member 6 on the side of the outer peripheral portion of the orifices 12 and 13, similarly to the above-mentioned gas generator P3 according to the third embodiment. Therefore, it is not necessary to provide with the cooling/filtering member in every combustion chamber 41 and 42 and only one cooling/filtering member 6 has to be provided.

In the gas generator P4 according to the fourth embodiment, the gas generated by burning the gas generants 16 charged in the respective combustion chambers 41 and 42 passes through the respective orifices 12 and 13 and then it is discharged into the enclosed space A. The gas having passed through the orifices 12 and 13 stays in this enclosed space A, and then passing through the cooling/filtering member 6, it is uniformly discharged from the gas discharge hole 14 bored in the direction at right angles to the axis 0 of the housing 80 in the circumferential direction. Since the cooling/filtering member 6 is positioned at the outer peripheral side of the orifices 12 and 13, the burning efficiency of the gas generants 16 in the combustion chambers 41 and 42 can be improved.

### [Fifth Embodiment]

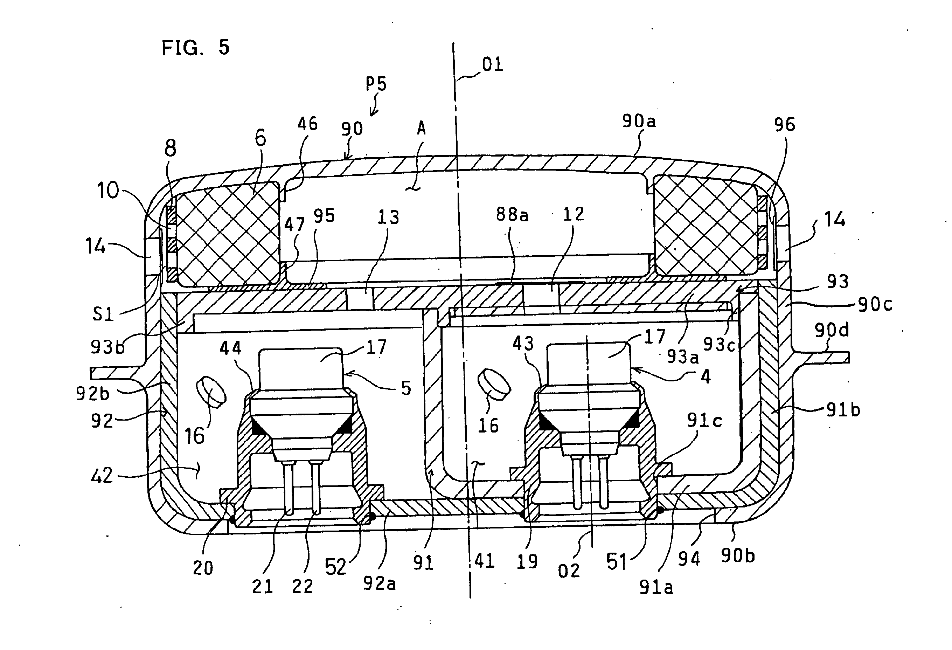

Fig. 5 shows a cross sectional view of a gas generator P5 according to a fifth embodiment of the invention. Here, a different point from the gas generators P1 to P4 respectively shown in Figs. 1 to 4 will be described and the description of the same point as in Figs. 1 to 4 is omitted.

The gas generator P4 comprises a housing 90, first, second, and third partition members 91, 92, and 93, a cooling/filtering member 6, first and second ignitors 4 and 5, and an inner cylindrical member 8.

The housing 90 is a short cylindrical body having a top surface and a bottom surface in the vertical direction. In Fig. 5, the reference numeral 01 indicates the axis of the cylindrical housing 90. The top portion 90a, the bottom portion 90b, and the side potion 90c of the cylindrical body of the housing 90 are integrally formed.

A projection 46 vertically protrudent from the top portion 90a is provided in the inner surface of the top portion 90a. The projection 46 restrains the cooling/filtering member 6 not to move inwardly.

An opening 94 which can bare the end portions of the lead pins 21 and 22 of the respective first and second ignitors 4 and 5 installed within the housing 90 is provided in the bottom portion 90b.

A plurality of gas discharge holes 14 are formed in the side portion 90c of the cylindrical body in the circumferential direction. The gas discharge holes 14 are bored in the direction at right angles to the axis 01 of the housing 90. A flange 90d is provided at a position almost in a middle of the cylindrical side portion 90c in the direction of height and lower than the gas discharge holes 14. The flange 90d extends outward in the direction substantially at right angles to the axis 01 of the housing 90. A retainer and the like (not illustrated) of an airbag module is fitted to the flange portion 90d.

The space within the housing 90 is partitioned by the first, second, and third partition members 91, 92, and 93 into two of the first and second combustion chambers 41 and 42 aligned left and right in the direction at right angles to the axis 01. The third partition member 93 forms the first combustion chamber 41 together with the first partition member 91. The third partition member 93 forms the second combustion chamber 42 together with the second partition member 92.

Further, the third partition member 93 separates the enclosed A from the first and the second combustion chambers 41 and 42. The same gas generants 16 as the gas generants of Fig. 1 are charged in the first and second combustion chambers 41 and 42.

The second partition member 92 has a bottom portion 92a of substantially disk plate provided along the inner surface of the bottom portion 90b of the housing 90 and a side portion 92b of a cylindrical body substantially extending upward and vertically along the inner surface of the side portion 90c of the housing 90 from the circumferential edge of the bottom portion 92a. The height of the side portion 92b of the cylindrical body is lower than the gas discharge holes 14 of the housing 90. The whole shape of the second partition member 92 is like a short cup with its opening upward.

The first and second holes 51 and 52 are formed in the bottom portion 92a of the second partition member 92 at an eccentric position from the axis 01. The first and second holes 51 and 52 are holes for accommodating the first and second ignitors 4 and 5, similarly to the first and second holes 51 and 52 of Fig. 1.

The first partition member 91 has a bottom portion 91a of substantially disk plate along one portion of the inner surface of the bottom portion 92a of the second partition member 92 and a cylindrical side portion 91b substantially extending upward and vertically along one portion of the inner surface of the side portion 92b of the second partition member 92 from the circumferential edge of the bottom portion 91a. The position of the upper end of the side portion 91b of the cylindrical body is equal to or a little lower than the position of the upper end of the side portion 92b of the second partition member 92. The whole shape of the first partition member 91 is like a short cup with its opening upward.

A hole 91c having the substantially same diameter as the first hole 51 of the second partition member 92 is bored in the bottom portion 91a of the first partition member 91. The position of the first partition member 91 and the diameter of the bottom portion 91a of the first partition member 91 are determined so that the center of the first hole 51 and the center of the hole 91c can overlap on the same axis 02 and that the first partition member 91 can enclose the first ignitor 4.

When the opening of the first partition member 91 and the opening of the second partition member 92 are closed by the third partition member 93, the first combustion chamber 41 is formed in the inside of the first partition member 91 and the second combustion chamber 42 is formed in the inside of the second partition member 92 except for the first combustion chamber 41.

Alternatively, the first partition member 91 may be provided on the side of the second hole 52, hence to enclose the second ignitor 5 with the first partition member 91 so as to form the combustion chamber.

The third partition member 93 has a disk plate 93a having the substantially same diameter as the inner diameter of the opening of the second partition member 92 and a flange 93b substantially vertically protrudent downward from the circumferential edge of the bottom portion 93a. The flange 93b is pinched in the opening of the second partition member 92 to seal the space within the second partition member 92. Further, a projection 93c is provided in the first partition member 91 so as to seal the inside of the second partition member 92 as well as to seal the inside of the first partition member 91 by being engaged with the inner peripheral surface of the opening of the first partition member 91.

One or a plurality of orifices 12 for the first combustion chamber 41 are provided in the third partition member 93 at the portion corresponding to the first combustion chamber 41. One or a plurality of orifices 13 for the second combustion chamber 42 are provided in the third partition member 93 at the portion corresponding to the second combustion chamber 42. The orifices 12 and 13 are all bored in parallel to the axis 01.

An enclosed space A is formed between the top surface of the third partition member 93 and the inner top surface of the housing 90 on the side of the outlet of the orifices 12 and 13. The orifices 12 and 13 communicate the respective combustion chambers 41 and 42 with the enclosed space A.

A supporting ring 95 for positioning the cooling/filtering member 6 is provided on the top surface of the third partition member 93. The supporting ring 95 has a projection 47 protrudent upward at a position opposite to the projection 46 provided on the top surface 90a of the housing.

The cooling/filtering member 6 is provided along the side portion 90c of the housing. As the cooling/filtering member 6, the same one as the cooling/filtering member 6 shown in Fig. 1 is used.

Thanks to the projection 46 provided on the top surface 90a of the housing and the projection 47 of the supporting ring 95, the cooling/filtering member 6 is restrained not to move inside of the housing 90.

The projection 47 of the supporting ring 95 and the projection 46 provided on the top surface 90a of the housing support the cooling/filtering member 6 and induce all the gas discharged from the enclosed space A to pass through the cooling/filtering member 6. The inner cylindrical member 8 is installed along the outer peripheral surface of the cooling/filtering member 6. A plurality of gas discharge holes 10 are provided in the inner cylindrical member 8. As the material of the inner cylindrical member 8, the same material as the inner cylindrical member 8 of Fig. 1 is used. An annular space S1 for dispersing the gas is formed between the outer peripheral surface of the inner cylindrical member 8 and the inner peripheral surface of the side portion 90c of the housing 90.

Restraining member 88a such as a burst plate, a seal, and the like is provided on the outside of the orifice 12 for the first combustion chamber 41 to be ignited second, in order to restrain the gas generated from the second combustion chamber 42 to be ignited first, from entering into the first combustion chamber 41.

Further, the gas discharge holes 14 are covered with the burst plate, the seal member 96, or the like. This can prevent water and the like from entering into the combustion chamber and the gas generants charged in the combustion chambers from getting humid. Further, internal pressure in the gas generator can be adjusted.

Further, similarly to Fig. 1, it is preferable to set the total sum of the aperture areas of all the gas discharge holes 14 larger than the total sum of the aperture areas of all the orifices, so as to release all the pressure from the housing 80 at a discharge time of the combustion gas.

### [Sixth Embodiment]

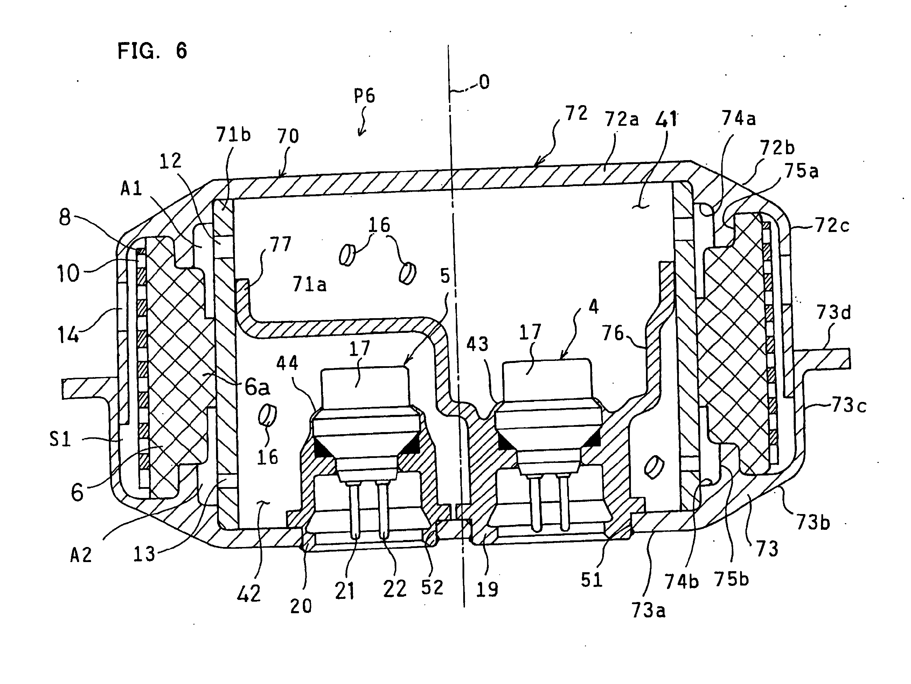

Fig. 6 shows a cross sectional view of a gas generator P6 according to a sixth embodiment of the invention. Here, a different point from the gas generators P1 to P5 respectively shown in Figs. 1 to 5 will be described and the description of the same point as in Figs. 1 to 5 is omitted.

A cross sectional view of the gas generator P6 according to the sixth embodiment is shown in Fig. 6. The gas generator P6 according to this embodiment is provided with an annular convex portion 6a on the inner peripheral side of the cooling/filtering member 6, in a way of coming into contact with the outer peripheral surface of the second partition member 71b, in addition to the gas generator P3 of Fig. 3. At a position between the orifices 12 and the orifices 13, it is closely attached to the outer peripheral surface of the second partition member 71b in the circumferential direction. As the material of the annular convex portion 6a, the same material as the cooling/filtering member 6 is used.

The annular convex portion 6a separates the enclosed space into the enclosed space A1 extending in the first combustion chamber 41 through the orifices 12 and the enclosed space A2 extending in the second combustion chamber 42 through the orifices 13.

In the gas generator P6 according to this embodiment, the gas generated by burning the gas generants 16 charged in the respective combustion chambers 41 and 42 passes through the respective orifices 12 and 13 and is discharged into the enclosed spaces A1 and A2. The gas having passed through the respective orifices 12 and 13 stays in the enclosed spaces A1 and A2, and then passing through the cooling/filtering member 6, it is uniformly discharged from the gas discharge holes 14 bored in the direction at right angles to the axis 0 of the housing 70, in the circumferential direction. At this time, the gas of the enclosed spaces A1 and A2 is restrained from mutually invading into the other space thanks to the annular convex portion 6a, and therefore even if the structure of the burst plate is simplified, it is possible to prevent the generated gas from invading into the other combustion chamber and inducing gas generation there. In this sense, the annular convex portion 6a works as the restraining member for restraining the gas generated in one combustion chamber from entering into the other combustion chamber.

### [Seventh Embodiment]

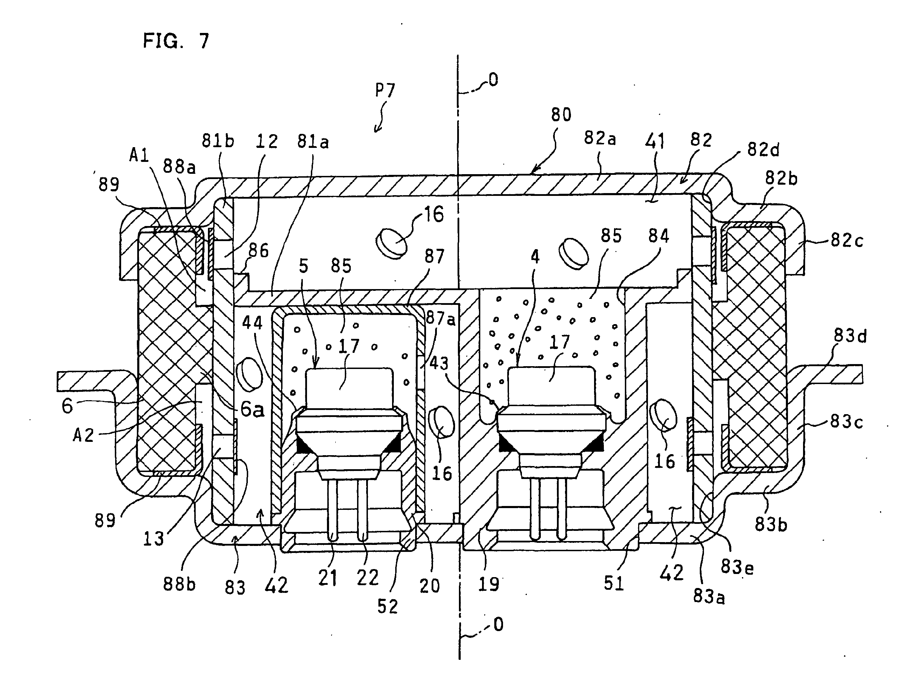

Fig. 7 shows a cross sectional view of a gas generator P7 according to a seventh embodiment of the invention. Here, a different point from the gas generators P1 to P6 respectively shown in Figs. 1 to 6 will be described and the description of the same point as in Figs. 1 to 6 is omitted.

The cross sectional view of the gas generator P7 according to the seventh embodiment is shown in Fig. 7. The gas generator P7 according to this embodiment is provided with an annular convex portion 6a on the inner peripheral side of the cooling/filtering member 6, in a way of coming into contact with the outer peripheral surface of the second partition member 81b, in addition to the gas generator P4 of Fig. 4. At a position between the orifices 12 and the orifices 13, it is closely attached to the outer peripheral surface of the second partition member 81b in the circumferential direction. As the material of the annular convex portion 6a, the same material as the cooling/filtering member 6 is used.

The annular convex portion 6a separates the enclosed space into the enclosed space A1 extending in the first combustion chamber 41 through the orifices 12 and the enclosed space A2 extending in the second combustion chamber 42 through the orifices 13.

In the gas generator P7 according to this embodiment, the gas generated by burning the gas generants 16 charged in the respective combustion chambers 41 and 42 passes through the respective orifices 12 and 13 and is discharged into the enclosed spaces A1 and A2. The gas having passed through the respective orifices 12 and 13 stays in the enclosed spaces A1 and A2, and then passing through the cooling/filtering member 6, it is uniformly discharged from the gas discharge holes 14 bored in the direction at right angles to the axis 0 of the housing 80, in the circumferential direction. At this time, the gas of the enclosed spaces A1 and A2 is restrained from mutually invading into the other space thanks to the annular convex portion 6a, and therefore even if the structure of the burst plate is simplified, it is possible to prevent the generated gas from invading into the other combustion chamber and inducing the other gas generation there. In this sense, the annular convex portion 6a works as the restraining member for restraining the gas generated in one combustion chamber from entering into the other combustion chamber.

Thus, by using the gas generators P4 to P7 having the restraining member, the gas generated in the second combustion chamber 42 and discharged from the orifices 13 can be restrained from invading into the first combustion chamber 41 from the orifices 13, during the period of the gas generation of the second combustion chamber 42 in the initial stage of expansion to the gas generation of the first combustion chamber 41 with a small time difference. Therefore, the discharge amount of the gas can be assuredly adjusted.

### (Summary)

In each of the above-mentioned gas generators of the invention, a housing is partitioned into two or more combustion chambers and a space for staying the generated gas is provided in the outlet portion of the orifices formed in the respective combustion chambers. This enables the generated gas to be discharged from the gas discharge hole efficiently and uniformly.

Since an orifice is provided in every combustion chamber, the optimum diameter of each orifice can be set in each combustion chamber, thereby adjusting the burning.

For example, in the first to the fourth embodiments and the sixth and the seventh embodiments, it is preferable that the diameter of the orifice is 0.5 mm to 10 mm inclusive. Further, more preferably, it is 2 mm to 5 mm inclusive. In the fifth embodiment, preferably, it is 0.5 mm to 25 mm inclusive and more preferably, it is 2 mm to 15 mm inclusive.

In the case of providing with the means for restraining the gas generated in one combustion chamber from entering into the other combustion chamber, even if gas is generated in one combustion chamber, gas generation in the other combustion chamber will not be induced, and therefore, gas generation in the respective combustion chambers can be performed effectively with a time difference.

As the restraining member, there are a burst plate and a seal provided in the orifice as mentioned above and a filter for separating an enclosed space. The burst plate and the seal have a damp proof function of the gas generant and a function of adjusting an internal pressure of the gas generator.

As the material of the seal, for example, aluminum, stainless steel, and the like can be used. In the case of aluminum, the thickness is preferably 20 µm to 250 µm inclusive. More preferably, it is 50 µm to 150 µm inclusive. In the case of stainless steel, it is preferably 10 µm to 150 µm inclusive. More preferably, it is 25 µm to 100 µm inclusive.

The gas generator according to the invention is not restrained to the above-mentioned embodiments, but various modifications, including, for example, a gas generator with only one part of the several ignitors set eccentric and the other set concentric, are possible without departing from the scope and the spirit of the invention.

A seal can be attached to the gas discharge hole, for damp proof of the gas generant and adjustment of an internal pressure within the gas generator.

In the gas generator according to the invention as mentioned above, discharge gas from the combustion chambers into which a housing is partitioned can be controlled by the orifices provided in the respective combustion chambers and a space for staying the gas having passed through the orifices is provided, thereby making the gas discharged from the gas discharge hole efficiently uniform. Therefore, an airbag can be expanded depending on each situation.

### Industrial Applicability

The invention provides a gas generator for a situation-adaptable airbag capable of controlling the expansion and inflation of an airbag by burning a gas generant within a housing by a plurality of ignitors and it is optimum for a gas generator which can adjust the discharge amount of gas for expanding and inflating an airbag so as to make the gas amount discharged from the housing uniform in the circumferential direction of the housing.

## Claims

1. A gas generator comprising:
a cylindrical housing;
gas generants for generating gas by burning, which are charged in a plurality of combustion chambers divided within the housing and provided with orifices; and
a plurality of ignitor devices for burning the gas generants within the respective combustion chambers by spouting flame into the respective combustion chambers,
wherein at least one of the ignitor devices is arranged at an eccentric position from an axis of the housing, and
an enclosed space for staying the generated gas discharged from the respective orifices is formed at an outlet portion of the orifices in the combustion chamber having the ignitor devices arranged at the eccentric position, and after passing through the enclosed space, the gas is discharged from a gas discharge hole formed in the housing.

2. The gas generator, according to Claim 1, wherein
a cooling/filtering member is provided on an inner peripheral side of the orifices and a space for dispersing the generated gas is formed between the cooling/filtering member and the orifices.

3. The gas generator, according to Claim 1, wherein
a cooling/filtering member is provided on an outer peripheral side of the orifices.

4. The gas generator, according to Claim 1, comprising
restraining member for restraining the gas generated in one combustion chamber from entering into the other combustion chamber.

5. The gas generator, according to Claim 3, wherein
the cooling/filtering member is positioned so as to separate the enclosed space into the respective enclosed spaces communicating to the respective orifices.

6. The gas generator, according to Claim 1, wherein
the gas discharge hole is formed so as to uniformly discharge gas in a direction at right angles to the axis of the housing and in a circumferential direction and aperture area of the gas discharge hole is larger than the sum of the aperture areas of the respective orifices.

7. The gas generator, according to Claim 1, wherein
a seal is attached to at least one of the orifices.

8. The gas generator, according to Claim 1, wherein
a seal is attached to the gas discharge hole.
